(19) **Europäisches Patentamt**

**European Patent Office**

**Office européen des brevets**

(11) **EP 0 705 538 B1**

(12) **EUROPEAN PATENT SPECIFICATION**

(45) Date of publication and mention
of the grant of the patent:
**06.12.2000 Bulletin 2000/49**

(51) Int Cl.[7]: **A21D 8/04**

(21) Application number: **95202436.2**

(22) Date of filing: **07.09.1995**

(54) **Improvement of bread doughs**

Verbesserungen von Brotteig

Amélioration de pâte à pain

(84) Designated Contracting States:
**AT BE CH DE DK ES FR GB GR IE IT LI LU MC NL
PT SE**

(30) Priority: **07.09.1994 EP 94202573**

(43) Date of publication of application:
**10.04.1996 Bulletin 1996/15**

(73) Proprietor: **DSM N.V.
6411 TE Heerlen (NL)**

(72) Inventor: **Souppe, Jerome
F-59290 Wasquehal (FR)**

(74) Representative:
**Matulewicz, Emil Rudolf Antonius, Dr. et al
DSM Patents & Trademarks
Office Delft
P.O. Box 1
2600 MA Delft (NL)**

(56) References cited:
**EP-A- 0 321 811       EP-A- 0 338 452
EP-A- 0 368 015**

## Description

The present invention relates to improvement of doughs for baked products, especially bread doughs. In particular, it relates to use of enzymes, e.g. in the form of a bread improver composition, to improve the properties of such doughs.

Conventional bread improvers are complex mixtures containing various functional ingredients such as oxidizing and reducing agents (e.g. ascorbic acid, cysteine), enzymes (e.g. $\alpha$-amylase, hemicellulase), emulsifiers (e.g. DATA-esters, monoglycerides, SSL), fatty materials (e.g. fat, lecithin) and carriers or bulk materials (starch, sugars, etc). Many of the commonly used bread improvers contain chemical oxidants such as ascorbic acid and bromate which are used to increase the strength of the dough. From the consumer's point of view, it is advantageous to minimise the use of these oxidants, which are considered as chemical additives. The resistance of consumers to chemical additives is growing and there is therefore need to replace conventional dough oxidants by consumer friendly additives. However, bread quality is lowered considerably when oxidants are omitted. Indeed, it is difficult to achieve a suitable dough for a baked product without using oxidants.

Sulfhydryl oxidase has previously been investigated as a substitute for conventional non-enzymic oxidants in bread doughs. Bovine sulfhydryl oxidase as a single enzyme additive in such doughs has, however, been reported to have no significant beneficial effect on dough properties (Kaufmann and Fennema, Cereal Chemistry (1987) 64 (3), 172-176). Microbial sulfhydryl oxidase has previously been reported to be useful as a bread dough additive, but only in combination with glucose oxidase (see EP-A 0321811) or in combination with glucose oxidase and hemicellulose and/or cellulose degrading enzyme activity (see EP-A 0338452).

We have now surprisingly found that addition of sulfhydryl oxidase, e.g. a microbial sulfhydryl oxidase, to a bread dough can have a beneficial effect on dough properties in combination with addition of one or more hemicellulases even in the absence of glucose oxidase. Importantly, such an enzyme combination can be used in bread doughs in preference to non-enzymic oxidants such as ascorbic acid and bromate. By including such an enzyme mixture in a bread dough, it is possible to improve loaf volume while maintaining or even increasing dough extensibility. In contrast, it is well known that use of ascorbic acid to improve loaf volume will have a negative effect on dough extensibility. This is particularly unfavourable in the production of baked products such as French sticks, baguettes, pizza and croissants for which a high dough extensibility is desirable.

Hemicellulloses in cereal products mainly consist of $\beta$-glucans and pentosans. The desirability of a moderate hydrolysis of pentosans in bread doughs has long been recognized (Enzymolysis of pentosans of wheat flour, K. Kulp, Cereal Chem. (1968) 45, 339-350). Aspergillus niger and Aspergillus awamori hemicellulases are widely used in the baking industry. The inventors for the present invention have found that among hemicellulases, two types are particularly useful for use in bread doughs in combination with sulfhydryl oxidase: endoxylanases and arabinofuranosidases. Two arabinofuranosidase isoenzymes have been identified: arabinofuranosidase A (Ara A) and arabinofuranaosidase B (Ara B). For the purpose of the present invention, an arabinofuranosidase preparation comprising as the enzyme component at least predominately Ara B is preferred. Ara A and Ara B are described in 'Mode of action of $(1\rightarrow4)\beta$-D-arabinoxylan arabinofuranohydrolase (AXH) and $\alpha$-L-arabinofuranosidase on alkali extractable wheat flour arabinoxylans' Carbohydrate Research (1993), 24, 345-353, F.J.M. Kormelink; H. Gruppen; A.G.J. Voragen.

For the purpose of dough-making according to the present invention, sulfhydryl oxidase may be derived from Aspergillus niger as described in Aspergillus niger sulfhydryl oxidase, R.S. de la Motte, F.W. Wagner, Biochemistry 26 (1987)7363-7371.

In one aspect, the present invention thus provides a method of preparing a dough for a baked product which includes incorporating into the dough an effective amount of endoxylanase and an effective amount of sulfhydryl oxidase in the absence of glucose oxidase so as to increase the volume of the baked product and produce a dough extensibility of at least 98% of the extensibility of the same dough minus improver additives.

According to another aspect of the invention an effective amount of an arabinofuranosidase preparation, most preferably an arabinofuranosidase preparation in which Ara B is the major isoenzyme of the enzyme component and an effective amount of sulfhydryl oxidase, can be incorporated into the dough so that both loaf volume and dough extensibility are improved.

The present invention may be applied to a variety of dough preparation processes including direct proofing, retarded dough processes, sour dough processes and frozen dough processes. It may be applied with flours from varied cereals such as wheat or rye to manufacture all kinds of yeast-leavened flour products such as bread as well as sweetened products such as cakes.

As hereinbefore indicated, the methodology of the present invention is, however, particularly favourable for application in the production of baked products for which extensibility of the dough is a critical factor for product quality. Use of enzymes in accordance with the present invention is, for example, especially favoured for the preparation of French bread doughs suitable for production of French sticks or baguettes.

In a dough-making process of the present invention, the required enzymes may be added separately or in the form of a mixed enzyme composition. In a further aspect, the present invention thus provides an enzyme composition for use in a dough-making method of the invention wherein the enzyme component comprises endoxylanase and sulfhydryl oxidase in the absence of a glucose oxidase, preferably together with one or more arabinofuranosidases. Most preferably, such an enzyme composition will include endoxylanase, sulfhydryl oxidase and arabinofuranosidase at least predominantly of the B isoenzyme form.

In a further embodiment, the present invention provides an enzyme composition wherein the enzyme component comprises endoxylanase, sulfhydryl oxidase and arabinofuranosidase, preferably at least for the major part Ara B.

An enzyme composition of the present invention may be in the form of a bread improver composition containing one or more additional dry dough ingredients e.g. one or more of salt, sugar, lecithin, gluten, soya flour, malt and other enzymes known for use as baking ingredients such as β-glucosidase, β-glucanase, β-xylosidase, amyloglucosidase, amylase, proteases, peroxidase and catalase. Such a bread improver composition may include all or a large proportion of the flour of the baked product.

The amounts of endoxylanase, sulfhydryl oxidase and arabinofuranosidase required for a dough-making process of the present invention will depend upon the flour employed and the type of process and may be readily determined by baking tests. By way of guidance, however, the amount of endoxylanase may be in the range 1-1000 units per kg flour, e.g. 5- 200 units per kg flour, and the amount of sulfhydryl oxidase may be in the range 5-1000 units per kg flour, e.g. 30-250 units per kg flour. When it is desired to additionally provide arabinofuranosidase activity in the dough, this may, for example, be present in the range 1-1000 units per kg flour, preferably in the range 5-200 units per kg flour. As hereinbefore indicated, such activity may desirably be provided by use of an arabinofuranosidase preparation in which Ara B is the major isoenzyme of the enzyme component.

For making a French bread dough suitable for French sticks or baguettes, it has, for example, been found favourable to incorporate about 50 units of sulfhydryl oxidase per kg of flour in combination with about 70 units of endoxylanase per kg of flour. To obtain improved dough extensibility in addition to improved loaf volume, such an enzyme combination may suitably supplemented with about 70 units of arabinofuranosidase, largely Ara B (see Example 2).

Units of endoxylanase, sulfhydryl oxidase and arabinofuranosidase as given herein should be understood to be units defined with reference to the following assays.

Endoxylanase (Lyx) activity is measured by the hydrolysis of xylan from oat spelts suspended (35 g/l) in 1M glycine buffer pH 2.75. The viscosity of the solution is determined by using a capillary viscosimeter (Ubbelhode type) at 47°C. The time (t) needed for the upper meniscus of the liquid to fall down between two reference points is measured within time (T). The slope of the plot of T versus 1/t yields an apparent kinetic constant. 1 Lyx unit is the amount needed to reach a value of 1 min$^{-1}$ for that kinetic constant.

Arabinofuranosidase (Arf) activity is measured by the hydrolysis of p-itrophenyl-arabinofuraanoside. One arf unit is the amount of enzyme needed to liberate 1 μmole p-nitrophenol per minute under the conditions of the test described in 'Purification and some properties of an arabinofuranosidase from Aspergillus niger, action on grape monoterpenyl arabinosylglycosides', Z. Gunata, J.M. Brillouet, S. Voirin, R. Baumes, R. Cordonnier, J. Agric. Food Chem. 38 (1989) 772.

Sulfhydryl oxidase (Sox) converts thiol compounds to their corresponding disulfides according to the equation:

$$2 \, RSH + 0_2 \rightarrow RSSR + H_20_2$$

Sox activity is determined by measuring the disappearance of glutathione in buffer solution in the presence of oxygen. One sox unit is the amount of enzyme needed to oxidize 1 μmole glutathione per minute at 30°C and pH 7.

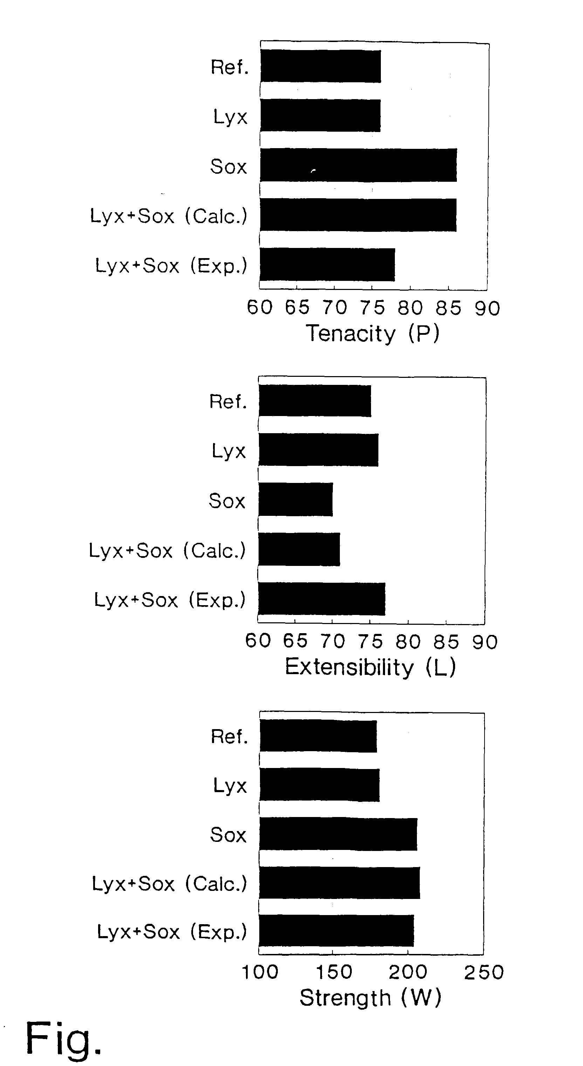

Legend to the Figure

Results from alveograph test as described in Example 1. Ref. no enzymes nor ascorbic acid added. Lyx+Sox (calc.) is calculation of the effect of Lyx + Sox assuming no synergy. Lyx+Sox (Exp.) is experimental result of Lyx + Sox.

Example 1

In order to determine the rheological effects of enzymes and ascorbic acid (AA) separately, the following experiment was performed.

A virgin flour, devoid of any additives or processing aid, was used. Ascorbic acid or an enzyme composition was added according to Table 1. An alveograph was operated according to a standard procedure AFNOR V-03-710. Alveograph traces were drawn from a Chopin alveograph: kneading at 24°C for 20 minutes.

Table 1

| Test No. | AA (ppm) | Units Lyx | Units Sox |
|----------|----------|-----------|-----------|
| 1 | 0 | 0 | 0 |
| 2 | 0 | 70 | 0 |
| 3 | 0 | 0 | 500 |
| 4 | 0 | 70 | 500 |
| 5 | 100 | 0 | 0 |

Table 2

| Test No. | P | L | W |
|----------|-----|----|-----|
| 1 | 76 | 75 | 179 |
| 2 | 76 | 76 | 181 |
| 3 | 86 | 70 | 206 |
| 4 | 78 | 77 | 204 |
| 5 | 103 | 63 | 220 |

In Table 2 the rheological properties of the formed doughs are shown. The P-value is related to tenacity of the dough, L is related to elasticity and W to strength of the dough (AFNOR V-03-710). A desirable result is an increase in strength (W) in combination with an increase of the elasticity (L) and a reduction of the tenacity (P).

It is clear that ascorbic acid increases the strength of a dough. However, at the same time an undesirable reduction of the elasticity and an increase of the tenacity occurs. As in the case of chemical oxidizing agents, Sox also increases the strength and the tenacity, but reduces the elasticity. In the Figure, the effect of Lyx, Sox and the combination Lyx + Sox is shown on the parameters P, L and W. From the effect of Lyx and Sox alone, a combined effect can be calculated (Lyx + Sox (Calc.)). The effect is compared with the experimental result (Lyx + Sox (Exp.)). This shows that a combination of Sox and Lyx results in strong favourable synergy on extensibility and tenacity, while at the same time the strength of the dough is not decreased significantly.

Example 2

Dough was prepared by mixing:
2 kg French virgin flour, 45 g sodium chloride, 70 g baker's yeast, enzymes and/or AA (see Table 3 below; units are units per kg flour) and 1.2 litres water cooled at 4°C, kneading for 15 minutes and then

- leaving one part in a proofing system for fermentation; the height of that dough piece after 3 hours fermentation enabled evaluation of the tolerance of the dough;
- mechanically shaping the remaining part into baguettes and measuring the length. This enabled evaluation of the extensibility of the dough. The baguettes were left for fermentation at 20°C for 1h 45 mins

and finally baked for 20 minutes at 225°C. Loaf volumes of baked breads were measured.

Table 3

| Test No. | Units Lyx | Units Arf | Units Sox | AA (ppm) |
|----------|-----------|-----------|-----------|----------|
| 1 | 0 | 0 | 0 | 0 |
| 2 | 0 | 0 | 0 | 80 |
| 3 | 40 | 10 | 0 | 80 |
| 4 | 70 | 0 | 50 | 0 |
| 5 | 70 | 70 (AraB) | 50 | 0 |
| 6 | 70 | 70 (AraA) | 50 | 0 |
| 7 | 0 | 70 (AraB) | 50 | 0 |

Table 4

| Test No. | Extensibility (cm) | Dough Tolerance (mm) | Loaf Volume |
|---|---|---|---|
| 1 | 70 | 70 | 2940 |
| 2 | 65 | 69 | 3080 |
| 3 | 69 | 67 | 3227 |
| 4 | 69 | 69 | 3258 |
| 5 | 75 | 69 | 3265 |
| 6 | 69 | 67 | 3200 |
| 7 | 69 | 73 | 3280 |

As shown in Table 4, the addition of ascorbic acid alone improved the loaf volume. However, it also reduced the extensibility of the dough. As hereinbefore mentioned, this reduction in dough extensibility is a negative aspect of the application of ascorbic acid.

Ascorbic acid was also tested in combination with Lyx and Arf, an additive combination known for use in baking, (test no. 3). Ara B was the major isoenzyme in the Arf preparation.

In test no. 4, an enzyme combination was investigated that resulted in a loaf volume even higher than that observed with the combination of ascorbic acid with Lyx and Arf. The extensibility was the same as for the combination of ascorbic acid with Lyx and Arf.

Dough extensibility was found surprisingly to be further improved by the addition of Arf without any negative effect on dough tolerance or loaf volume (test no. 5).

Comparison of results obtained in tests no. 5 and 6 show that Ara B performs better than Ara A with regard to extensibility and loaf volume mainly.

Dough tolerance and loaf volume were found surprisingly to be optimal with the combination of Sox and Arf replacing ascorbic acid (test no. 7).

**Claims**

1. A method of preparing a dough for a baked product which includes incorporating into the dough an effective amount of hemicellulase and an effective amount of sulfhydryl oxidase in the absence of glucose oxidase.

2. A method according to claim 1 wherein the hemicellulase is an endoxylanase.

3. A method according to claim 1 whereby the hemicellulase and sulfhydryl oxidase are added so as to increase the volume of the baked product and produce a dough extensibility of at least 98% of the extensibility of the same dough minus improver additives.

4. A method according to claim 2 wherein endoxylanase is included in the dough at 1-1000 units per kg flour and sulfhydryl oxidase is included in the dough at 5-1000 units per kg flour.

5. A method according to claim 1 wherein the hemicellulase is arabinofuranosidase.

6. A method according to claim 5 whereby the arabinofuranosidase is added so as to improve both volume of the baked product and dough extensibility.

7. A method according to claim 5 wherein said arabinofuranoside preparation is included in the dough so as to provide 1-1000 arabinofuranosidase (Arf) units per kg of flour.

8. A method according to claim 5 wherein the enzyme component of said preparation is at least predominately arabinofuranosidase B.

9. A method according to claim 1 wherein the dough is a French bread dough suitable for production of a baked product selected from French sticks and baguettes.

10. A method according to claim 1 whereby the hemicellulase comprises endoxylanase and arabinofuranosidase said arabinofuranosidase predominately being arabinofuranosidase B.

11. A method of producing a baked product which comprises preparing a dough according to any one of claims 1 to 10 and baking the dough thus prepared.

12. A dough obtainable by a method according to any one of claims 1 to 10.

13. A baked product obtainable by baking a dough according to claim 12.

14. An enzyme composition for use in a method according to claim 1 wherein the enzyme component comprises hemicellulase and sulfhydryl oxidase in the absence of glucose oxidase.

15. An enzyme composition according to claim 14 which includes endoxylanase and/or arabinofuranosidase and sulfhydryl oxidase.

16. An enzyme composition according to any one of claims 14 to 15 in the form of a bread improver composition containing one or more additional dry dough ingredients.

**Patentansprüche**

1. Verfahren zum Herstellen eines Teigs für eine Backware, bei dem in den Teig eine wirksame Menge einer Hemicellulase und eine wirksame Menge einer Sulfhydryloxidase in Abwesenheit einer Glucoseoxidase eingearbeitet wird.

2. Verfahren nach Anspruch 1, worin die Hemicellulase Endoxylanase ist.

3. Verfahren nach Anspruch 1, wobei die Hemicellulase und die Sulfhydryloxidase derart zugegeben werden, daß das Volumen der Backware erhöht und ein Teigausdehnungsvermögen von mindestens 98% des Ausdehnungsvermögens des gleichen Teigs ohne die Verbesserungsadditive erreicht wird.

4. Verfahren nach Anspruch 2, worin die Endoxylanase in den Teig mit 1 - 1000 Einheiten pro kg Mehl und die Sulfhydryloxidase in den Teig mit 5 - 1000 Einheiten kg Mehl eingearbeitet werden.

5. Verfahren nach Anspruch 1, worin die Hemicellulase Arabinofuranosidase ist.

6. Verfahren nach Anspruch 5, wobei die Arabinofuranosidase derart zugegeben wird, daß sowohl das Volumen der Backware als auch das Teigausdehnungsvermögen verbessert werden.

7. Verfahren nach Anspruch 5, worin das Arabinofuranosidpräparat derart in den Teig eingearbeitet wird, daß 1 - 1000 Einheiten Arabinofuranosidase (Arf) pro kg Mehl erreicht werden.

8. Verfahren nach Anspruch 5, worin die Enzymkomponente des genannten Präparats wenigstens hauptsächlich Arabinofuranosidase B ist.

9. Verfahren nach Anspruch 1, worin der Teig ein Teig für Pariser Brot ist, der zur Herstellung einer Backware geeignet ist, die aus französischen Stangen und Baguette ausgewählt ist.

10. Verfahren nach Anspruch 1, worin die Hemicellulase Endoxylanase und Arabinofuranosidase enthält, wobei die Arabinofuranosidase hauptsächlich Arabinofuranosidase B ist.

11. Verfahren zum Herstellen einer Backware, bei dem ein Teig gemäß einem der Ansprüche 1 bis 10 hergestellt und der so hergestellte Teig gebacken wird.

12. Teig, erhältlich durch ein Verfahren nach einem der Ansprüche 1 bis 10.

13. Backware, erhältlich durch Backen eines Teigs gemäß Anspruch 12.

**14.** Enzymgemisch zur Verwendung bei einem Verfahren gemäß Anspruch 1, worin die Enzymkomponente Hemicellulase und Sulfhydryloxidase in Abwesenheit von Glucoseoxidase enthält.

**15.** Enzymgemisch nach Anspruch 14, das Endoxylanase und/oder Arabinofuranosidase und Sulfhydryloxidase enthält.

**16.** Enzymgemisch nach einem der Ansprüche 14 und 15 in Form eines Brotverbesserungsgemisches, das einen oder mehrere zusätzliche Trockenteigbestandteile enthält.

**Revendications**

**1.** Procédé de préparation d'une pâte pour un produit cuit, qui comprend l'incorporation à la pâte d'une quantité efficace d'hémicellulase et d'une quantité efficace d'oxydase de sulfhydryle en l'absence d'oxydase de glucose.

**2.** Procédé selon la revendication 1, dans lequel l'hémicellulase est une endoxylanase.

**3.** Procédé selon la revendication 1, dans lequel l'hémicellulase et l'oxydase de sulfhydryle sont ajoutées de manière à augmenter le volume du produit cuit et à produire une extensibilité de la pâte d'au moins 98% de l'extensibilité de la même pâte sans additifs d'amélioration.

**4.** Procédé selon la revendication 2, dans lequel l'endoxylanase est incluse dans la pâte à raison de 1-1000 unités par kg de farine et l'oxydase de sulfhydryle est incluse dans la pâte à raison de 5-1000 unités par kg de farine.

**5.** Procédé selon la revendication 1, dans lequel l'hémicellulase est une arabinofuranosidase.

**6.** Procédé selon la revendication 5, dans lequel on ajoute l'arabinofuranosidase de manière à améliorer à la fois le volume du produit cuit et l'extensibilité de la pâte.

**7.** Procédé selon la revendication 5, dans lequel ladite préparation d'arabinofuranosidase est incluse dans la pâte de manière à délivrer 1-1000 unités d'arabinofuranosidase (Arf) par kg de farine.

**8.** Procédé selon la revendication 5, dans lequel le composant enzymatique de ladite préparation est au moins de manière prédominante l'arabinofuranosidase B.

**9.** Procédé selon la revendication 1, dans lequel la pâte est une pâte à pain française qui convient à la production d'un produit cuit sélectionné parmi les ficelles et les baguettes.

**10.** Procédé selon la revendication 1, dans lequel l'hémicellulase comprend une endoxylanase et une arabinofuranosidase, ladite arabinofuranosidase étant de manière prédominante l'arabinofuranosidase B.

**11.** Procédé de production d'un produit cuit qui comprend la préparation d'une pâte selon l'une quelconque des revendications 1 à 10 et la cuisson de la pâte ainsi préparée.

**12.** Pâte susceptible d'être obtenue par un procédé selon l'une quelconque des revendications 1 à 10.

**13.** Produit cuit susceptible d'être obtenu par cuisson d'une pâte selon la revendication 12.

**14.** Composition enzymatique utilisée dans un procédé selon la revendication 1, dans laquelle le composant enzymatique comprend de l'hémicellulase et de l'oxydase de sulfhydryle en l'absence d'oxydase de glucose.

**15.** Composition enzymatique selon la revendication 14, qui comprend une endoxylanase et/ou une arabinofuranosidase et une oxydase de sulfhydryle.

**16.** Composition enzymatique selon l'une quelconque des revendications 14 à 15, sous la forme d'une composition d'amélioration du pain qui contient un ou plusieurs ingrédients de pâte secs supplémentaires.

Fig.